# FASCICULE DE BREVET EUROPEEN

(11) **EP 0 849 140 B1**
(45) Date de publication et mention de la délivrance du brevet: **14.05.2003**
(21) Numéro de dépôt: 97410118.0
(22) Date de dépôt: 24.10.1997
(51) Int. Cl.: B62B 5/00

(54) **Chariot destiné aux courses dans les magasins, chargeable plein et sans efforts dans un coffre de voiture**
Einkaufswagen, der vollbeladen ohne Mühe in eineb Kofferraum eines Pkws geladen werden kann
Shopping trolley adapted to be loaded with a full basket in an automobile trunk without effort.

(30) Priorité: 22.11.1996 FR 9614614
(43) Date de publication de la demande: 24.06.1998
(73) Titulaire: Soriano, Michel, 38100 Grenoble (FR)
(72) Inventeur: Soriano, Michel, 38100 Grenoble (FR)
(74) Mandataire: de Beaumont, Michel

(56) Documents cités:
- FR-A- 2 617 786
- FR-A- 2 708 898
- GB-A- 2 234 472
- US-A- 2 953 287
- US-A- 4 251 178
- US-A- 4 941 797
- US-A- 5 503 424
- US-A- 5 538 386

## Description

La présente invention concerne un chariot de type supermarché. Elle concerne plus particulièrement un chariot muni d'un panier amovible pouvant être chargé plein et sans effort dans un coffre de voiture, puis déchargé et roulé jusque dans le logement de l'utilisateur.

Habituellement, pour faire les courses dans un supermarché, il faut trouver un chariot, le consigner avec une pièce et l'emmener dans le magasin. L'utilisateur doit ensuite mettre les marchandises dans des sacs au passage à la caisse puis décharger un à un les sacs dans son coffre de voiture. Le chariot restant sur la surface de vente, il faut le ramener pour le déconsigner. Arrivé chez lui, l'utilisateur décharge les sacs de sa voiture un à un et doit les emmener chez lui afin de les ranger. Il doit les poser pour ouvrir les portes, faire plusieurs voyages, etc. Cette opération qui est souvent longue et pénible représente une véritable corvée.

Certains chariots susceptibles d'être chargés ou déchargés pleins dans un coffre de voiture sont connus de la technique. La demande de brevet français 2 708 898 décrit un chariot muni d'un système à levier permettant de soulever le panier et de le déposer dans le coffre. L'inconvénient de ce type de chariot est l'effort important à fournir et l'impossibilité de franchir des seuils hauts tout en assurant le dépôt du panier sur le plancher du coffre. En outre, la largeur maximale du panier est de 60 cm (largeur de passage aux caisses), ce qui réduit considérablement la capacité du panier par rapport à ce que peut contenir un coffre moyen, généralement plus large que 60 cm.

Un objet de la présente invention est de prévoir un chariot dont le panier puisse être chargé et déchargé sans efforts dans un coffre, même si le seuil du coffre est haut.

Un autre objet de la présente invention est de prévoir un tel chariot dont le panier soit de grande capacité malgré la faible largeur de passage aux caisses.

Ces objets sont atteints grâce à un chariot de transport d'objets, comprenant un panier monté par deux bras latéraux sur un support à roulettes de manière à pouvoir être levé et déposé dans un coffre de véhicule en franchissant un éventuel seuil du coffre. Il comprend par ailleurs des biellettes parallèles articulées sur le panier et les bras latéraux, formant un système à parallélogramme déformable, et des moyens démultipliés pour entraîner en rotation les biellettes en synchronisme.

Selon un mode de réalisation de la présente invention, les moyens d'entraînement en rotation sont montés dans le panier.

Selon un mode de réalisation de la présente invention, les moyens d'entraînement en rotation comprennent des éléments montés dans chacun des bras latéraux, les éléments d'un bras étant reliés aux éléments de l'autre bras pour assurer le synchronisme.

Pour atteindre les objets susmentionnés, les bras latéraux peuvent également 5 coulisser horizontalement par rapport au support et le support comporter des moyens pour déplacer les bras latéraux par translation verticale.

Selon un mode de réalisation de la présente invention, les bras latéraux se détachent du support et restent montés sur le panier.

Selon un mode de réalisation de la présente invention, le support est pliable ou déboîtable de manière que ses éléments puissent être rangés autour du panier dans le coffre.

Selon un mode de réalisation de la présente invention, le sens de roulage du chariot est perpendiculaire au sens d'approche du chariot pour déposer le panier dans le coffre.

Selon un mode de réalisation de la présente invention, le panier contient au moins deux paniers internes à roulettes et est muni d'une face avant rabattable facilitant l'extraction des paniers internes lorsqu'ils se trouvent dans le coffre.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

La figure 1 représente une vue d'ensemble simplifiée d'un mode de réalisation de chariot selon l'invention avec un support en "X", et à commande par manivelle.

La figure 2 représente une vue d'ensemble simplifiée d'un mode de réalisation de chariot selon l'invention avec un support en "U" et à commande électrique. Le panier est à volet rabattable et à poignée escamotable.

La figure 3 représente des réducteurs latéraux à chaîne et de leur commande manuelle avec les biellettes qui constituent des parallélogrammes déformables.

La figure 4 représente une variante des réducteurs avec démultiplication au moyen d'un train d'engrenages.

La figure 5 représente une variante des réducteurs avec démultiplication au moyen d'un système à roue et vis sans fin.

La figure 6 représente la vue d'ensemble du chariot avec panier en position basse pour les courses.

La figure 7 représente la mise en position haute du panier pour introduction dans le coffre avec franchissement de seuil.

La figure 8 représente la position de dépôt dans le coffre.

La figure 9 représente la position de détachement du support et de repliage des bras latéraux dans le coffre.

La figure 10 représente l'ensemble du support replié dans le coffre avec le panier plein.

La figure 11 illustre le support déchargé et la remise en position des bras de support pour connexion.

La figure 12 illustre le principe du mouvement inverse d'extraction du panier.

La figure 13 illustre la remise en position basse du panier pour déplacement.

La figure 14 représente une vue partielle d'un mode de réalisation spécifique du ) support qui incorpore les réducteurs latéraux dans les bras de support (avec deux modes différents de commande centralisée).

La figure 15 représente un détail en coupe de la commande centralisée située sur l'articulation du support en "X".

La figure 16 représente un détail en coupe de la commande centralisée située selon une variante sur une traverse reliant les deux bras latéraux.

La figure 17 représente une vue de dessus des réducteurs à engrenages dans un bras support avec les deux modes de commande possibles représentés dans les figures précédentes.

La figure 18 représente un autre mode de réalisation du support démontable avec glissières et biellettes.

La figure 19 représente le support de la figure 18 replié dans le coffre.

La figure 20 représente un détail de montage des axes supportant les pignons (configuration à chaîne) pour un panier réalisé en fils soudés.

La figure 21 représente un panier en fils soudés avec volet avant rabattable.

La figure 22 représente un panier dans un coffre de voiture avec volet avant rabattable.

La figure 23 représente un mode de réalisation dans lequel le déplacement du panier est obtenu par un mouvement vertical du support et un mouvement horizontal du panier.

La figure 24 représente un panier avec des paniers internes.

La figure 25 illustre une utilisation des paniers internes à roulettes.

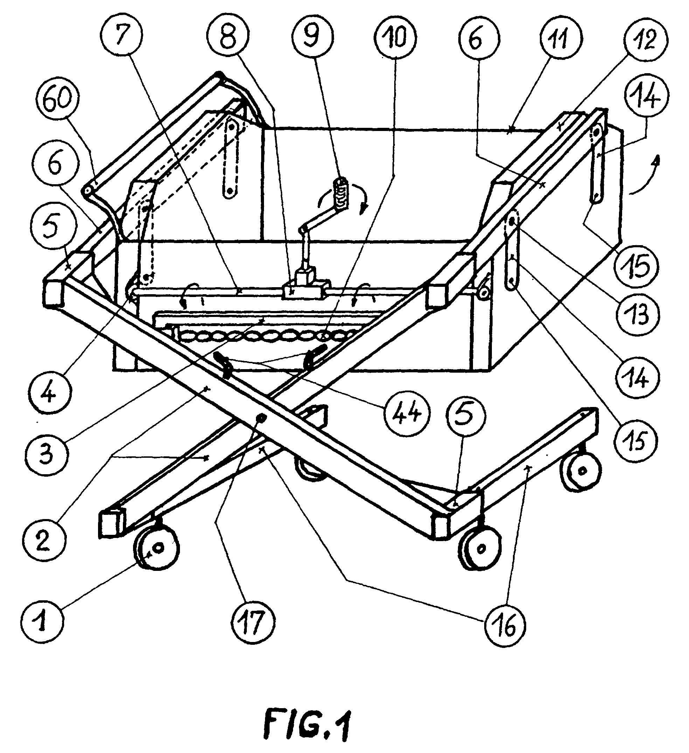

Dans la figure 1, un mode de réalisation de chariot selon l'invention comprend un châssis support 2 constitué de deux fers profilés du commerce en "X" articulés sur un axe 17. Leur écartement maximum est fixé par une chaîne 10 et ils sont tenus en position par une entretoise emboîtable 3 que l'on déboîte pour replier le support. Chacune des branches en "X" est terminée par deux boîtiers 5 avec des nervures de renfort. Les deux boîtiers du bas reçoivent par emboîtement deux longerons 16 qui sont munis de roulettes I et constituent ainsi la partie roulante du chariot.

5 Les deux boîtiers hauts 5 reçoivent également par emboîtement deux bras 6 droit et gauche qui supportent le panier 11 par l'intermédiaire, selon l'invention, de 4 biellettes 14 parallèles deux à deux. Chaque biellette 14 est montée tournante sur un axe 13 du bras 6. L'autre extrémité est montée fixe sur un axe 15 du panier. Autrement dit, la biellette tourne quand l'axe 15 tourne. Les 4 axes 15 sont tous entraînés en rotation en même temps et de façon synchrone par deux systèmes de réducteurs situés de part et d'autre du panier 11 dans les carters 12 droit et gauche. La commande de l'ensemble se fait par manivelle 9 qui entraîne en rotation l'arbre situé dans le tube de protection 7 par l'intermédiaire du renvoi d'angle 8. Selon une variante, la manivelle est remplacée par un petit moteur électrique monté sur le panier et alimenté à l'aide d'un flexible raccordé à une prise de courant batterie située dans le coffre de la voiture. La commande se fait alors au moyen d'un interrupteur. Une variante de construction consiste à prévoir un réducteur ou motoréducteur central situé au niveau du renvoi d'angle 8 et qui transmet le mouvement aux biellettes par l'arbre de transmission situé dans le tube de protection 7.

On remarquera que le chargement du panier 11 dans un coffre s'effectue perpendiculairement au sens de roulage du chariot. La largeur du panier doit toujours rester compatible avec le passage aux caisses, mais la longueur du panier peut être égale à la largeur du coffre et non à sa profondeur, ce qui permet le plus souvent d'accroître la capacité du panier.

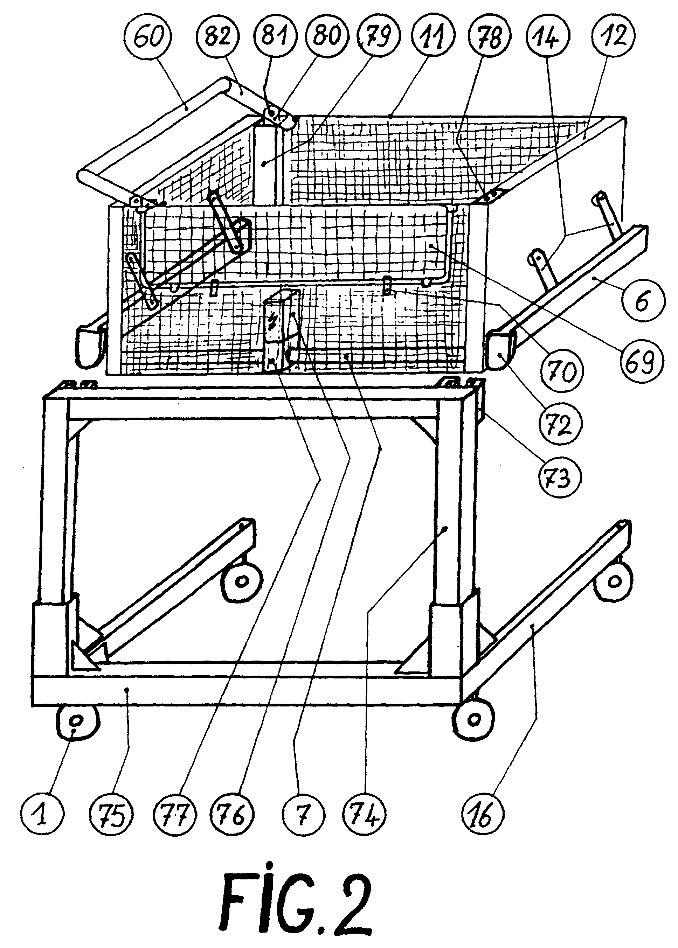

Dans la figure 2, le support est en "U" et composé de longerons à roulettes 16 reliés entre eux par une traverse arrière 75 qui porte deux tubes verticaux dans lesquels vient s'emboîter le support vertical 74. Le support vertical 74 comporte en partie haute deux encastrements 73 dans lesquels viennent s'emboîter les bras latéraux 6. Selon ce mode de réalisation le panier 11, automoteur, est mû par un motoréducteur à deux sorties. Le moteur 76 est alimenté lorsqu'on raccorde la prise de 12 volts 78 sur la batterie de la voiture à l'aide d'un cordon électrique situé dans le coffre. Le moteur 76 entraîne le réducteur à deux sorties 77, lequel entraîne à son tour les deux réducteurs latéraux par l'intermédiaire de l'axe situé dans le fourreau 7. On notera que lorsque le panier a été déposé dans le coffre de la voiture, il suffit de continuer le mouvement pour déboîter les pièces 73 et 72 qui sont emboîtées en "T" afin de permettre un coulissement tangent au mouvement de rotation. On peut alors continuer à faire tourner les bras 6 entraînés par les biellettes 14. Les bras 6 vont ainsi venir prendre appui sur le plancher du coffre et déplacer le panier vers le fonds du coffre. Cette opération libère entre le panier et le seuil du coffre une place suffisante pour venir ranger le support 74 dans le coffre après l'avoir déboîté du support à roulette. Les deux bras prennent place de part et d'autre du panier et la traverse entre le panier et le seuil du coffre (d'où l'appellation support en "U"). Le support à roulettes avec également une forme en "U" est alors lui aussi placé dans le coffre avec les roues de chaque côté du panier et la traverse 75 à l'arrière entre le seuil du coffre et le panier.

On notera que le panier a un volet rabattable 69 autour des charnières 70. On notera également la poignée 60 repliable, les biellettes 80 et 82 sont articulés sur l'axe 81 et prennent appui sur une butée située sur le panier. En tirant la poignée 60 vers le haut, on échappe à la butée et les biellettes 80 et 82 s'alignent et l'ensemble s'escamote dans les deux tubes 79 situés dans les angles du panier.

En variante les tubes verticaux 74 peuvent être liés par articulation au support à roulette 16 et l'on supprime ainsi la traverse supérieure. Les tubes 74 se replient alors sur le support 16. On notera que les profilés constituant les supports peuvent avoir des formes carrées, rectangulaires, circulaires, oblongues, etc.

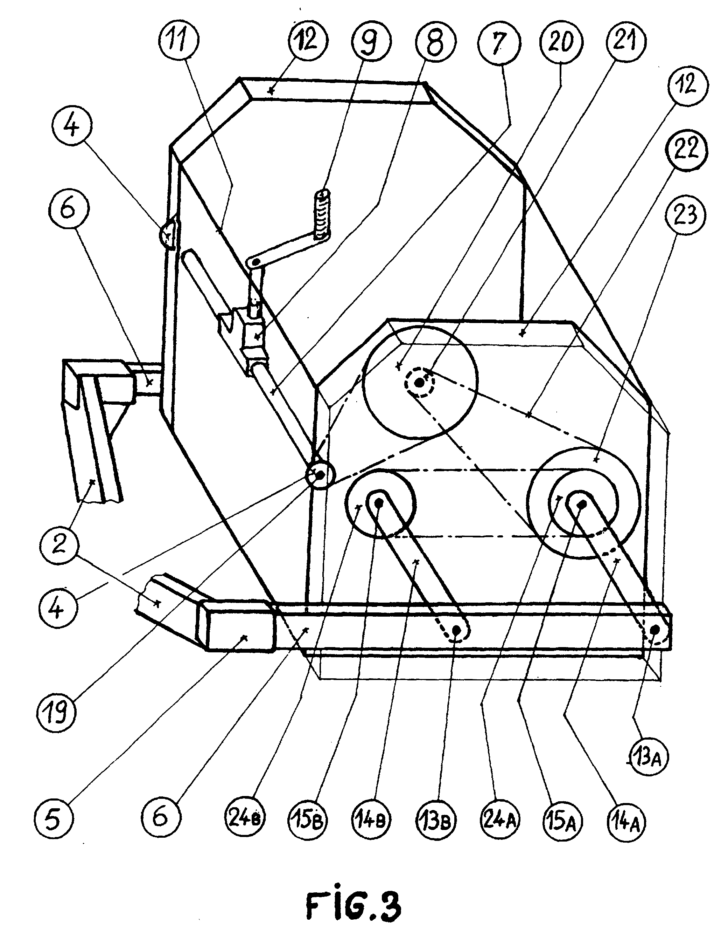

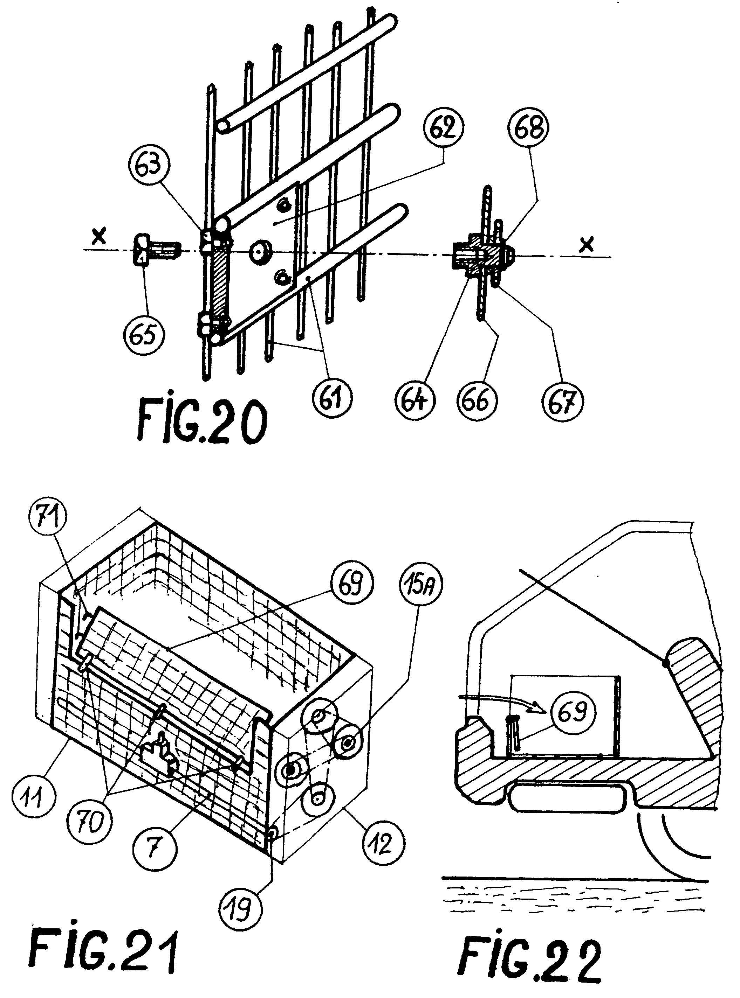

La figure 3 représente un réducteur à chaîne utilisable dans un panier selon l'invention pour déplacer les biellettes 14. Le renvoi d'angle 8 est actionné en rotation soit par la manivelle 9, soit par un petit moteur électrique (non représenté). De la même manière l'entraînement des deux réducteurs peut se faire directement en bout de l'axe 19 et peut être positionné ailleurs sur le panier 11. Dans cette configuration, le renvoi d'angle 8, à arbre traversant, entraîne en rotation l'axe 19 situé dans le fourreau de protection 7. L'axe 19 est solidaire du pignon 4 de petit diamètre, lequel entraîne par l'intermédiaire d'une chaîne à vélo le pignon 20 de grand diamètre. Les pignons 20 et 21 sont solidaires et montés fous sur un axe fixé sur le côté droit du panier 11. Le principe de ce montage sur un panier à fils soudés est représenté figure 20. Le pignon 21 entraîne à son tour le pignon 23 par l'intermédiaire de la chaîne à vélos 22. Le pignon 23, le pignon 24A et la biellette avant 14A correspondante sont, ensemble, liés en rotation et montés fous sur l'axe 15A qui est fixé sur le côté droit du panier 11. Le pignon 24A entraîne en rotation de façon synchrone par chaîne son homologue 24B de même diamètre qui est lié en rotation à la biellette arrière 14B ; ils sont montés fous sur l'axe 15B, fixé lui aussi sur le côté droit du panier 11. On notera que l'on peut faire varier le diamètre des pignons et le nombre d'étages de réduction ce qui a pour effet de faire varier le rapport de réduction donc l'effort nécessaire pour le déplacement du panier ainsi que la vitesse.

Ainsi la rotation de la manivelle 9 entraîne la rotation synchrone (avec démultiplication) des biellettes 14A et 14B autour des axes 15A et 15B. Ce faisant les 5 parallélogrammes ainsi constitués par les biellettes des côtés droit et gauche du panier 11 se déforment avec comme points fixes 13A et 13B sur les bras 6 du support 2. Cette déformation des parallélogrammes entraîne un mouvement de translation circulaire du panier 11 qui permet de le positionner sans effort à différentes positions d'utilisation normale ou de chargement/déchargement.

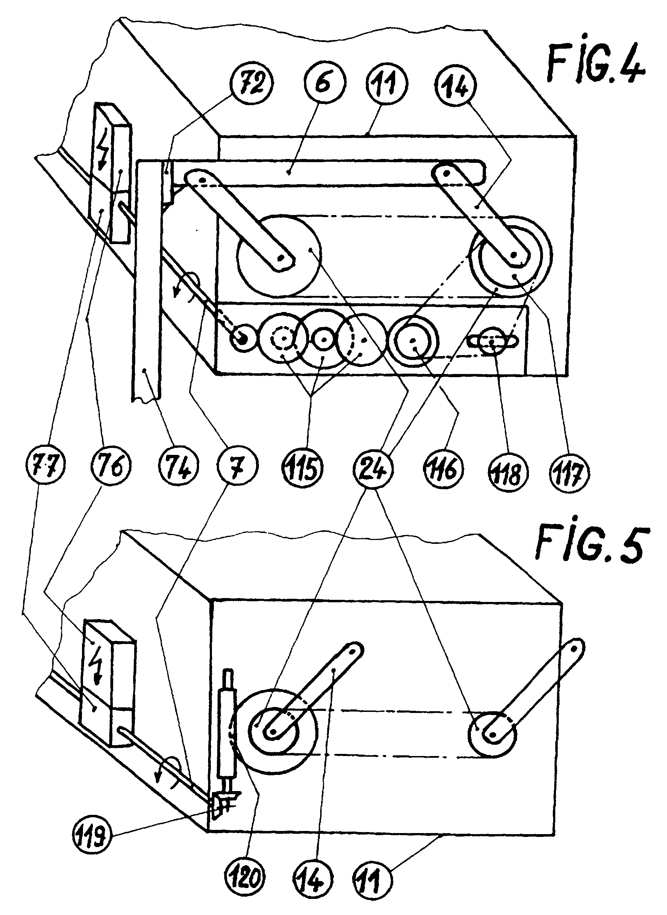

La figure 4 représente, à titre de variante, un réducteur à train d'engrenages 115. Un pignon à chaîne 116 entraîne les biellettes 14 par un pignon 117. Il est prévu un tendeur de chaîne 118.

La figure 5 représente, à titre de variante, un réducteur à roue et vis sans fin 120 qui entraîne des roues 24 liées aux biellettes 14. Le mouvement est transmis à partir du motoréducteur 76 et 77 par l'intermédiaire du couple conique 119.

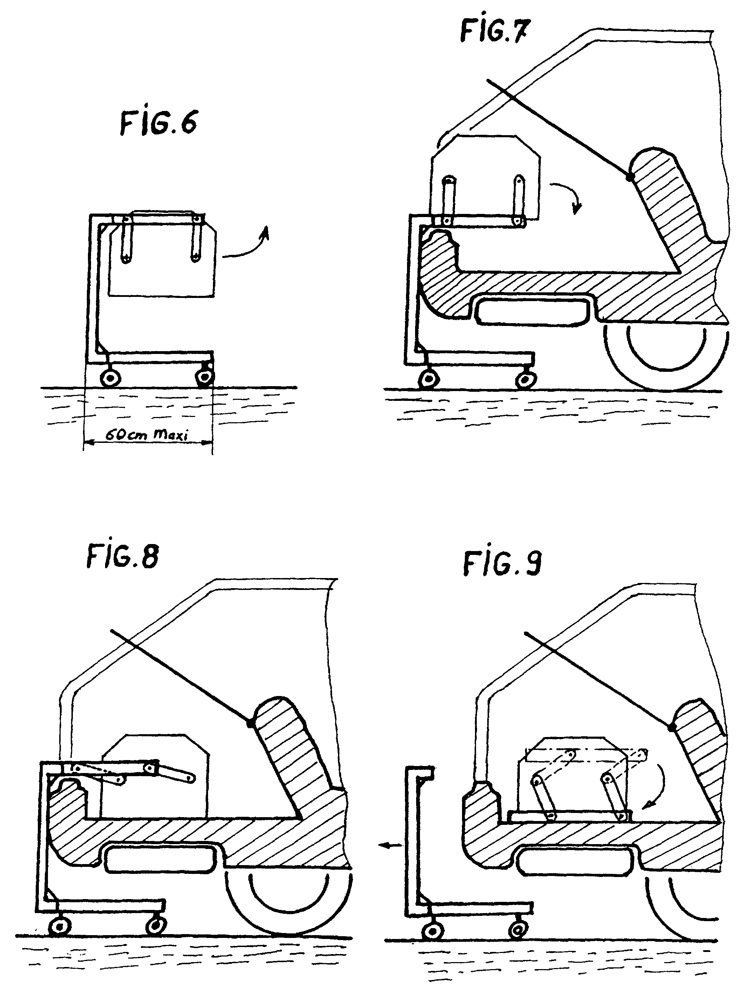

La figure 6 représente le chariot en position basse, pour faire les courses. Cette position assure une grande stabilité, le centre de gravité étant le plus bas possible. L'encombrement en largeur ne dépasse alors pas les 60 cm admissibles pour le passage aux caisses des supermarchés

La figure 7 représente le chariot en position haute afin de franchir le seuil du coffre de la voiture. L'approche contre la voiture est permise par la forme en porte à faux du support dont les roulettes passent sous la voiture. On notera que l'approche de la voiture se fait selon le sens transverse, c'est-à-dire à 90° par rapport au sens du roulage du chariot, ce qui permet d'adapter au mieux les dimensions du panier par rapport aux dimensions du coffre :
Largueur du panier (max. 60 cm) ≅ profondeur utilisable du coffre.
Longueur du panier ≅ largeur utilisable du coffre (grande dimension).
Hauteur du panier ≅ hauteur disponible du coffre.

Le chariot est donc roulé dans le sens de la longueur et approché de la voiture dans le sens de la largeur. La poignée de manutention 60 est positionnée en conséquence.

La figure 8 représente le chariot en position de chargement dans le coffre. Selon les formes des coffres de voiture, les dimensions du panier sont adaptées et ses faces peuvent être à pans coupés pour faciliter l'introduction dans le coffre.

En figure 9, le support est détaché du panier (encastrement en "T" ou bien tubes emboîtés). Les bras 6 sont alors entraînés en rotation par les biellettes et dégagés vers l'intérieur du coffre jusque sur le plancher, ce qui va permettre par appui des bras 6 sur le plancher de déplacer le panier vers l'arrière dans le coffre de la voiture. Ce déplacement peut également être obtenu avec des roulettes au-dessous du panier.

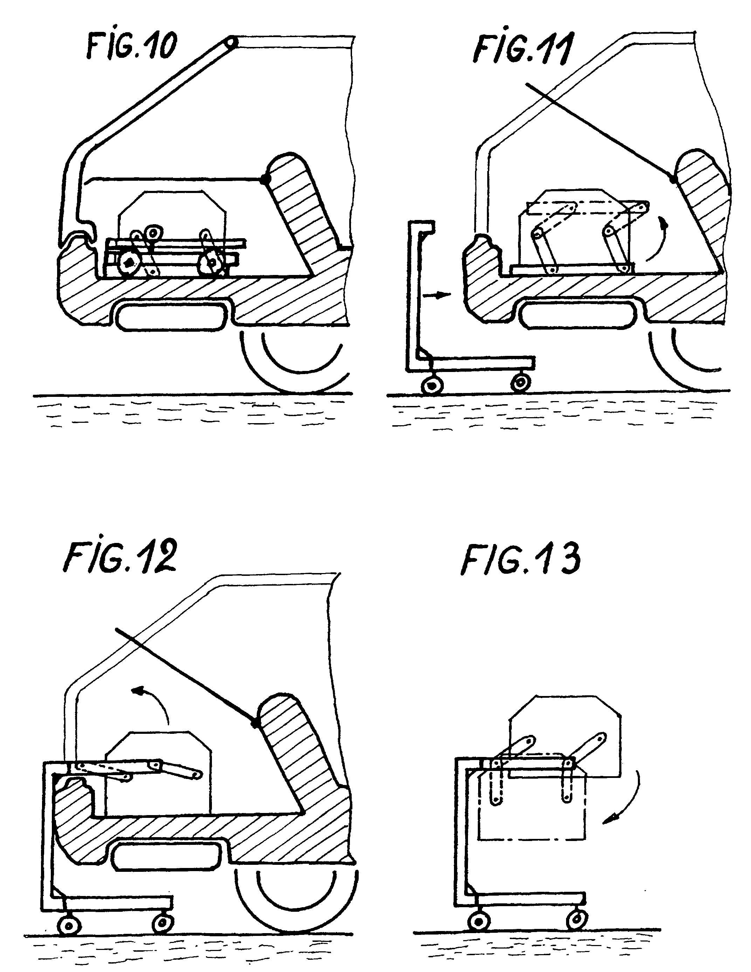

En figure 10, le support est déboîté et replié dans le coffre.

La partie en "U" est placée entre le panier et le seuil du coffre, ainsi que les longerons avec les roulettes qui sont placés de part et d'autre du panier. Le coffre peut alors être refermé. On notera que dans le montage en "X" les 2 branches du "X" et les longerons à roulettes 16 peuvent éventuellement rester liés entre eux et une fois les bras du "X" rassemblés, le tout placé directement dans le coffre, ou bien on débroche l'axe 17 et les deux demi-supports sont positionnés dans le coffre de part et d'autre du panier.

En figure 11, le support est déchargé, emboîté à nouveau, puis rapproché de la voiture. En tournant la manivelle (ou par commande électrique) on remonte les bras 6 en position et on les emboîte dans le support vertical.

En figure 12, en tournant la manivelle ou par commande électrique, on remonte le panier en position haute (avec un effort très faible malgré un panier de 60 à 80 kg grâce à la démultiplication). La position haute du panier permet de l'extraire du coffre de la voiture en franchissant le seuil, puis de tirer le chariot vers l'arrière.

En figure 13, en tournant la manivelle ou par commande électrique, on ramène le panier en position basse d'utilisation. Après déchargement, le chariot est ramené à la voiture pour être rangé dans le garage ou dans le coffre. Il peut également être rangé dans un placard avec l'option panier repliable, les faces latérales se repliant sur le fond. Le chariot attendra ainsi la prochaine utilisation.

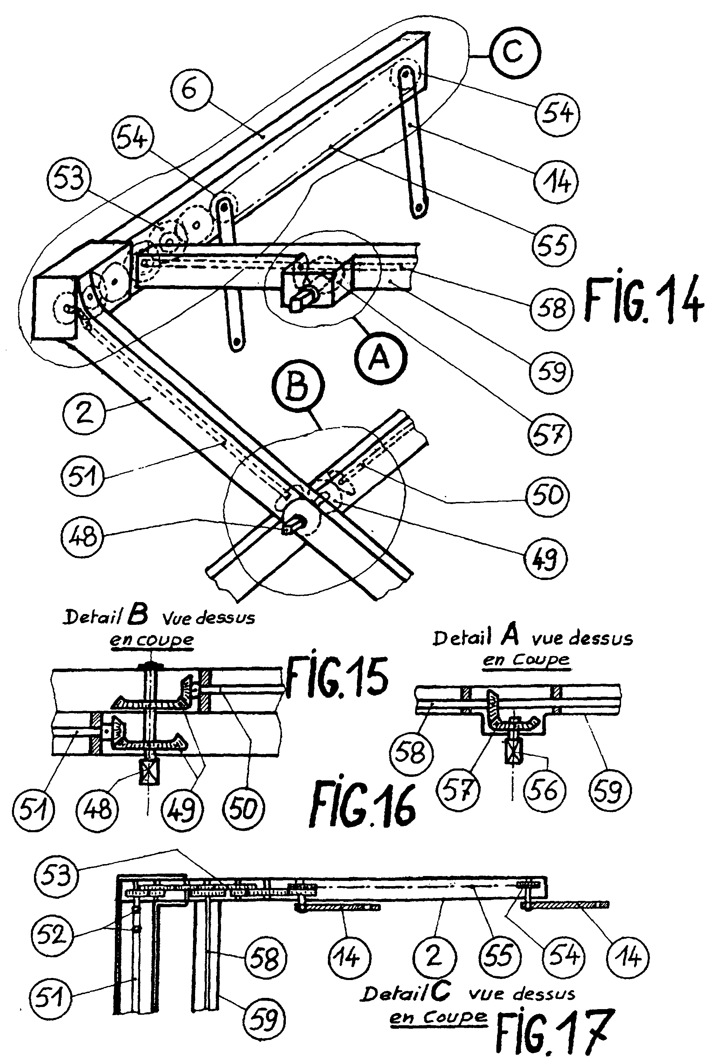

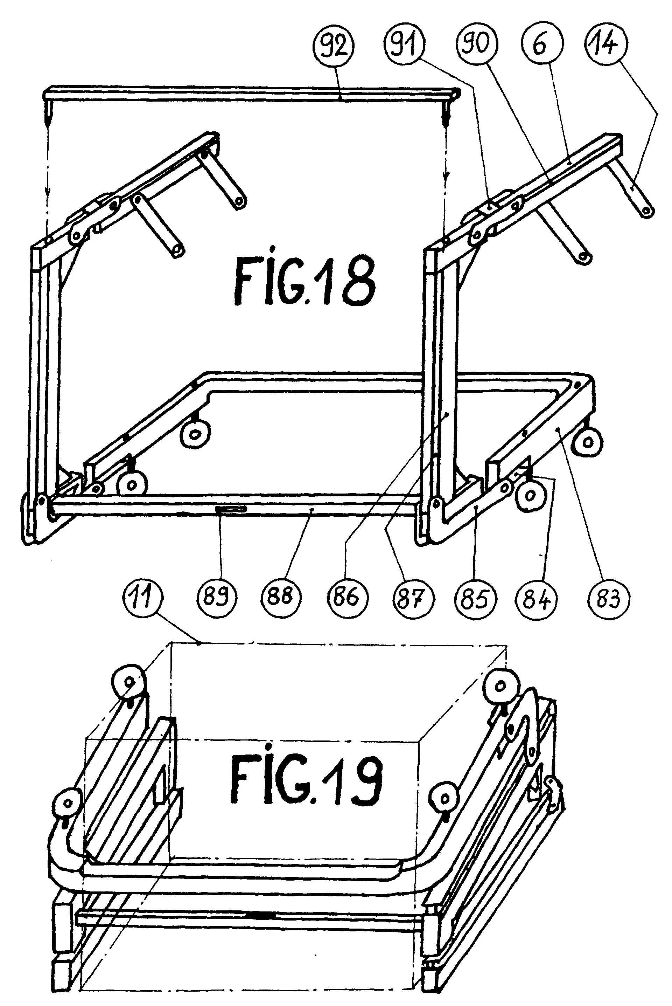

La figure 14 représente sur le même plan un système de réducteurs logés dans les bras 6 avec deux systèmes de commande possibles (1 seul étant nécessaire). On notera que la différence essentielle de cette variante est que les réducteurs sont situés sur le support fixe et entraînent en rotation le panier 11, alors que dans la solution précédente les réducteurs sont situés sur le panier 11 qui est ainsi automoteur. En variante 1 : voir fig. 15, la commande se fait par l'axe 48 du "X" à l'aide d'un renvoi par pignons coniques 49 qui transmet la rotation à l'intérieur des deux bras 6 par les axes 50 et 51 situés dans les deux branches 2 du support en "X". Les deux systèmes d'engrenage situés dans le bras 6 et dans le support 2 s'engrènent au moment de l'emboîtement. Le mouvement est ainsi transmis au système d'engrenage 53 qui va entraîner de façon synchrone, après réduction, les pignons 54 reliés entre eux par une chaîne 55. Ainsi les biellettes 14 vont être mises simultanément en mouvement.

La figure 15 représente en vue de dessus et en coupe le système de commande sur l'axe 48. En variante 2 : voir fig. 16, la commande se fait par l'axe 56 et là aussi sur un renvoi par pignons coniques 57 qui transmet le mouvement au système d'engrenage 53 par l'arbre de transmission 58. Il devra alors y avoir inversion du mouvement d'un côté (1 pignon en plus) afin d'avoir des rotations homogènes et synchrones. L'ensemble est logé dans la traverse 59 laquelle relie les deux bras 6 et se ramène contre le panier 11 au moment où les bras 6 sont déboîtés du support 2.

La figure 17 représente en vue de dessus et en coupe l'ensemble du système de transmission qui, par engrenage de petits et grands diamètres, constitue un réducteur permettant de réduire considérablement l'effort à produire pour déplacer le panier. On notera la liaison par cardan 52 nécessaire sur la transmission. Par ailleurs, il est possible de remplacer la transmission représentée par des systèmes à roue et vis sans fin situés sur les supports 6 au niveau des axes des biellettes 14.

La figure 18 représente un support dont toutes les pièces sont solidaires par l'intermédiaire de biellettes qui coulissent dans des glissières. Lorsque les bras latéraux 6 sont entraînés sur le fonds du coffre de la voiture ils entraînent à leur tour les supports 86 par l'intermédiaire des biellettes 91. L'utilisateur accompagnera les supports verticaux 86 et les glissera jusqu'au fond du coffre en les faisant glisser dans les glissières 90 sur les bras 6. De la même façon à son tour le support à roulettes 83 glissera sur les supports 86 en faisant se déplacer les biellettes 85 dans les glissières 87 et 84. On notera que l'on déboîte au préalable le support vertical 86 du support à roulettes 83 en appuyant sur le levier 89 situé sur la traverse 86.Il s'agit simplement d'une centralisation de déverrouillage par câbles et linguets.

La figure 19 représente l'ensemble du support selon la figure 18, une fois plié dans le coffre de part et d'autre du panier.

La figure 20 représente, selon une variante, des réducteurs à chaîne situés sur les côtés du panier, et un mode de fixation des axes des réducteurs qui portent les pignons entraînant les chaînes. Leur fixation au moyen de plaques 62 sur les fils du panier peut se faire par soudure ou bien par vis 63 qui viennent bloquer la plaque 62 contre les fils 61. L'axe 64 est lui aussi fixé sur la plaque 62 par vis 65 ou bien par soudure. L'axe 64 porte ici deux pignons 66 et 67 maintenus en place par un circlips 68 ou par tout autre moyen. La conception est différente selon le rôle des pignons 66 et 67, ici liés entre eux par soudure sur la même entretoise.

La figure 21 représente des détails de réalisation du volet 69, celui ci étant articulé sur les 3 charnières oblongues 70. Les crochets 71 de part et d'autre permettent d'accrocher le volet sur les parois latérales du panier 11. Dans cette conception l'axe 19 dans le tube 7 se trouve au bas du panier. Pour exemple un réducteur latéral est représenté avec un étage de réduction supplémentaire pour encore réduire l'effort.

La figure 22 représente une réalisation particulière de panier en fils soudés avec en face avant un volet repliable 69 qui permet de mettre facilement des objets dans le panier i lorsqu'il est vide dans le coffre de voiture.

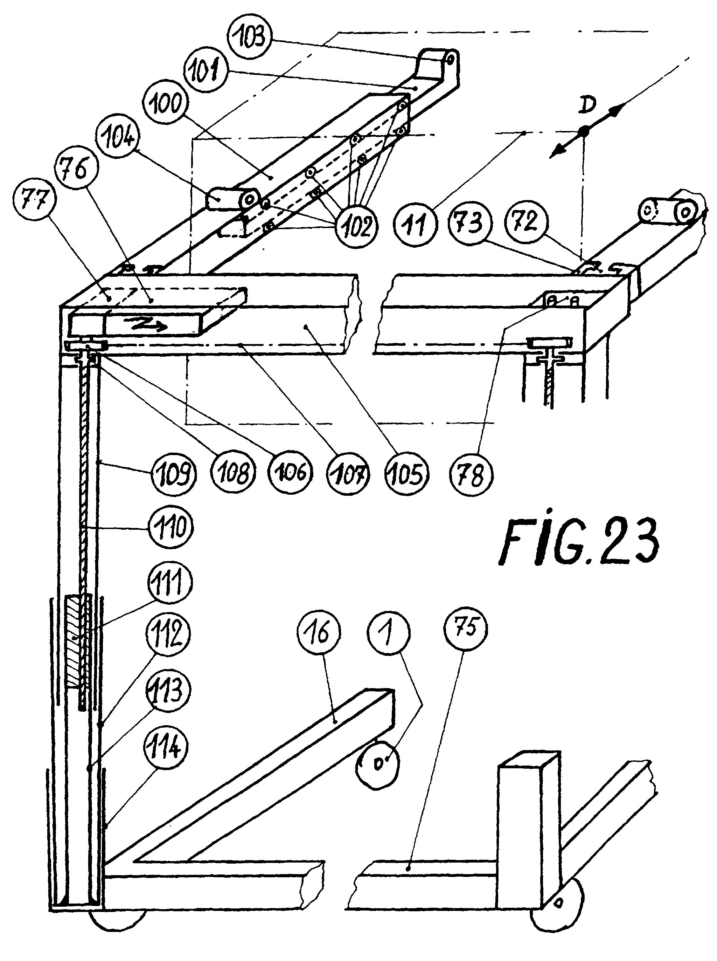

La figure 23 représente un mode de réalisation de la partie supérieure d'un support du type de la figure 2 permettant d'obtenir le chargement/déchargement du panier en combinant un mouvement vertical avec un déplacement horizontal du panier.

Les deux supports verticaux sont constitués d'un ensemble télescopique. Une vis 110 est entraînée par le motoréducteur 77 et elle est bloquée en translation par un épaulement 108. Sa rotation se produit dans le tube 109 et elle entraîne l'écrou 111 qui est solidaire du tube rectangulaire 113 lequel se déplace donc comme un piston sans tourner. L'ensemble se déplace dans un fourreau 112, lui même emboîté dans les tubes verticaux 114 du support à roulettes, le système étant symétrique. L'excitation du moteur électrique 76 par l'alimentation 78 transmet le mouvement aux deux vis 110 qui sont reliées entre elles au moyen de deux pignons 106 et d'une chaîne 107. L'ensemble est situé dans la traverse supérieure 105.

On obtient ainsi un mouvement vertical permettant d'amener le panier en position basse pour faire les courses, en position haute pour franchir le seuil, puis intermédiaire pour déposer le panier dans le coffre de la voiture. Les deux bras latéraux 100 sont liés au support vertical par emboîtement en "T" de 72 dans 73. Le panier 11 est posé sur deux galets 104 des deux bras 100. Des tubes 101 s'emboîtent dans les bras 100 et coulissent sur des galets hauts et bas 102 qui sont fixés aux tubes 100. Le panier est accroché aux deux extrémités apparentes 103 des tubes 101.

Ainsi, une fois le panier en position haute obtenue au moyen des supports verticaux télescopiques à vis 110, il suffit que l'utilisateur pousse légèrement le panier vers l'avant, ce qui entraîne le coulissement des tubes 101 dans 100 en assurant le maintien du panier. Ce mouvement permet de franchir le seuil du coffre. La redescente du panier au moyen du support vertical télescopique permet de déposer le panier dans le coffre. En continuant ce mouvement de descente il y a déboîtement automatique de l'encastrement 72 sur 73 et les bras latéraux restent liés au panier dans le coffre. Pour ranger le support vertical dans le coffre on le déplace vers le haut en l'extrayant des tubes 114 et les deux "fourches" que constituent les supports télescopiques verticaux trouvent leur place de part et d'autre du panier tandis que la traverse 105 se loge entre le seuil du coffre et le panier. Le support à roulettes se range également de la même façon dans le coffre de la voiture, la traverse 75 se plaçant elle aussi entre le panier et le seuil du coffre.

Pour extraire le panier du coffre il suffira alors de procéder de façon strictement inverse. Il est à noter que lorsque l'on fait les courses le panier sera retenu bloqué contre la traverse 105 au moyen d'un simple crochet. Il faut également préciser que les positions extrêmes du système vertical télescopique sont définies par des butées.

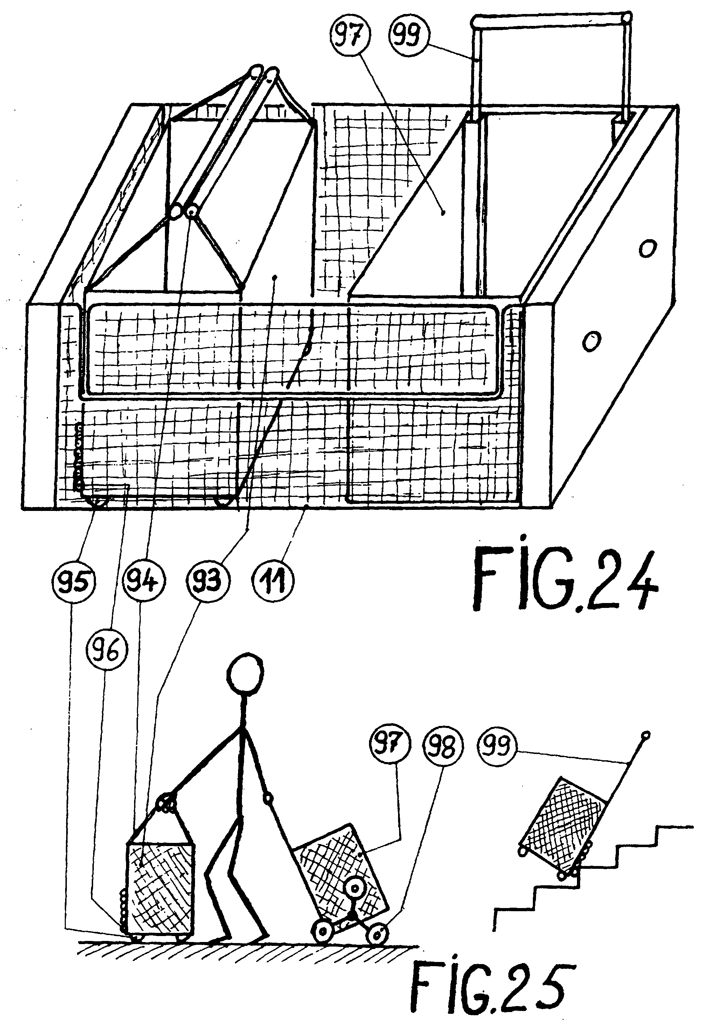

La figure 24 illustre une solution utilisable lorsque le chariot ne peut être roulé jusqu'à l'appartement de l'utilisateur du fait de l'existence d'escaliers. On dispose alors à l'intérieur du panier principal 11, deux paniers repliables 93 ou bien 97 de grandes dimensions dans lesquels on rangera les courses. A destination, on extrait les paniers 93 ou 97 du coffre et ils seront aisément conduits jusqu'à l'appartement de l'utilisateur selon figure 25. A cet effet ils sont munis en partie basse soit de petites roulettes 95 et de roulettes en façade 96, soit de roues en triangle 98 existant sur le marché. Les paniers repliables 93 ou bien 97 et leurs poignées escamotables 94 ou 99 seront repliés et mis à plat dans le panier principal 11, laissant ainsi le volume du panier 11 disponible.

## Revendications

1. Chariot de transport d'objets, comprenant un panier (11) monté par deux bras latéraux (6) sur un support à roulettes de manière à pouvoir être levé et déposé dans un coffre de véhicule en franchissant un éventuel seuil du coffre, **caractérisé en ce qu'**il comprend des biellettes (14) parallèles articulées sur le panier et les bras latéraux, formant un système à parallélogramme déformable, et des moyens démultipliés pour entraîner en rotation les biellettes en synchronisme.

2. Chariot selon la revendication 1, **caractérisé en ce que** les moyens d'entraînement en rotation sont montés dans le panier.

3. Chariot selon la revendication 1, **caractérisé en ce que** les moyens d'entraînement en rotation comprennent des éléments (53, 54) montés dans chacun des bras latéraux, les éléments d'un bras étant reliés aux éléments de l'autre bras pour assurer le synchronisme.

4. Chariot de transport d'objets selon la revendication 1, **caractérisé en ce que** les bras latéraux coulissent horizontalement par rapport au support et le support comporte des moyens pour déplacer les bras latéraux par translation verticale.

5. Chariot selon l'une quelconque des revendications 1 à 4, **caractérisé en ce que** les bras latéraux (6) se détachent du support et restent montés sur le panier.

6. Chariot selon l'une quelconque des revendications 1 à 5, **caractérisé en ce que** le support est pliable ou déboîtable de manière que ses éléments puissent être rangés autour du panier dans le coffre.

7. Chariot selon l'une quelconque des revendications 1 à 6, **caractérisé en ce que** le sens de roulage du chariot est perpendiculaire au sens d'approche du chariot pour déposer le panier dans le coffre.

8. Chariot selon l'une quelconque des revendications 1 à 7, **caractérisé en ce que** le panier (11) contient au moins deux paniers internes à roulettes (93, 97) et est muni d'une face avant rabattable facilitant l'extraction des paniers internes lorsqu'ils se trouvent dans le coffre.

## Patentansprüche

1. Wagen zum Transport von Gegenständen, mit einem mittels zwei Seitenarmen (6) auf einem Roll-Traggestell so angeordneten Korb (11), dass er angehoben und in einem Fahrzeug-Kofferraum unter Überwindung einer eventuellen Kofferraum-Schwelle abgesetzt werden kann, ***dadurch gekennzeichnet* dass** der Wagen an dem Korb und den Seitenarmen schwenkbar befestigte parallele Schwenkarme (14) umfasst, welche ein verformbares Parallelogramm-System bilden, sowie Untersetzungsmittel zum synchronen Drehantrieb der Schwenkarme.

2. Wagen nach Anspruch 1, **dadurch gekennzeichnet, dass** die Drehantriebsmittel in dem Korb angeordnet sind.

3. Wagen nach Anspruch 1, **dadurch gekennzeichnet, dass** die Drehantriebsmittel jeweils in jedem der Seitenarme angeordnete Elemente (53, 54) umfassen, wobei die Elemente des einen Seitenarms mit den Elementen des anderen Seitenarms verbunden sind, um den Synchronismus zu gewährleisten.

4. Wagen zum Transport von Gegenständen, nach Anspruch 1, **dadurch gekennzeichnet, dass** die Seitenarme horizontal relativ bezüglich dem Traggestell gleitend verschieblich sind und dass das Traggestell Mittel zur Verstellung der Seitenarme mittels Vertikal-Translation umfasst.

5. Wagen nach einem der Ansprüche 1 bis 4, **dadurch gekennzeichnet, dass** die Seitenarme (6) von dem Traggestell lösbar sind und an dem Korb angeordnet verbleiben.

6. Wagen nach einem der Ansprüche 1 bis 5, **dadurch gekennzeichnet, dass** das Traggestell zusammenfaltbar oder zerlegbar ausgebildet ist, derart dass seine Elemente in dem Kofferraum um den Korb herum verstaut werden können.

7. Wagen nach einem der Ansprüche 1 bis 6, **dadurch gekennzeichnet, dass** der Richtungssinn der Rollbewegung des Wagens rechtwinklig zur Richtung des Heranbringens des Wagens zum Absetzen des Korbs in dem Kofferraum ist.

8. Wagen nach einem der Ansprüche 1 bis 7, **dadurch gekennzeichnet, dass** der Korb (11) wenigstens zwei Innenkörbe (93,97) mit Rollen aufweist und mit einer umklappbaren Frontseite ausgebildet ist zur leichteren Entnahme der Innenkörbe, wenn sie sich im Kofferraum befinden.

## Claims

1. A goods transportation cart, including a basket (11) mounted by two lateral arms (6) on a rolling support such that it can be lifted and deposited in a vehicle trunk by passing an eventual threshold of the trunk, **characterized in that** it includes parallel rods (14) articulated on the basket and the lateral arms, forming a deformable parallelogram system, and gear down means for rotating the rods synchronously.

2. The cart of claim 1, **characterized in that** the rotating means are mounted in the basket.

3. The cart of claim 1, **characterized in that** the rotating means include elements (53, 54) mounted in each of the lateral arms, the elements of one arm being connected to the elements of the other arm to ensure the synchronicity.

4. A goods transportation cart according to claim 1, **characterized in that** the lateral arms slide horizontally with respect to the support and the support includes means for displacing the lateral arms vertically.

5. The cart of any of claims 1 to 4, **characterized in that** the lateral arms (6) are disconnectable from the support and remain mounted on the basket.

6. The cart of any of claims 1 to 5, **characterized in that** the support is foldable or dismountable such that its elements can be stowed around the basket in the trunk.

7. The cart of any of claims 1 to 6, **characterized in that** the rolling direction of the cart is perpendicular to the direction of approach of the cart for depositing the basket in the trunk.

8. The cart of any of claims 1 to 7, **characterized in that** the basket (11) includes at least two internal rolling baskets (93, 97) and is provided with a front surface that can be folded back, facilitating the extraction of the internal baskets when they are in the trunk.
